# EUROPÄISCHE PATENTSCHRIFT

(11) **EP 0 299 111 B1**
(45) Veröffentlichungstag und Bekanntmachung des Hinweises auf die Patenterteilung: **01.06.1994**
(21) Anmeldenummer: 87113938.2
(22) Anmeldetag: 24.09.1987
(51) Int. Cl.: B21D 3/10

(54) **Verfahren und Einrichtung zum Richten von Schlag aufweisenden Werkstücken**
Method and apparatus for straightening unbalanced workpieces
Procédé et dispositif de redressage de pièces présentant des parties excentrées

(30) Priorität: 13.07.1987 DE 3723097
(43) Veröffentlichungstag der Anmeldung: 18.01.1989
(73) Patentinhaber: Wilhelm Hegenscheidt Gesellschaft mbH, D-41804 Erkelenz (DE)
(72) Erfinder: Berstein, Garri, Dr.-Ing., D-5140 Erkelenz (DE)
(74) Vertreter: Aubele, Karl B.

(56) Entgegenhaltungen:
- EP-A- 0 275 876
- DE-B- 2 609 787
- DE-C- 3 037 688
- GB-A- 1 004 962
- US-A- 2 428 825
- PATENT ABSTRACTS OF JAPAN, Band 8, Nr. 216 (M-329)[1653], 3. Oktober 1984; & JP-A-59 101 228 (HINO JIDOSHA KOGYO K.K.) 11-06-1984
- IRON AGE, Band 197, Nr. 24, 16. Juni 1966, Seiten 76-77; C.T. YARBROUGH: "Heat directed at the right spots straightens corkscrew shafts"
- PATENT ABSTRACTS OF JAPAN, Band 7, Nr. 223 (M-247)[1368], 4. Oktober 1983; & JP-A-58 116 932 (SUMITOMO KINZOKU KOGYO K.K.) 12-07-1983
- PATENT ABSTRACTS OF JAPAN, Band 10, Nr. 381 (M-547)[2438], 19. Dezember 1986, & JP-A-61 172 618 (HITACHI CABLE LTD) 04-08-1986

## Beschreibung

Verfahren zum Richten von Schlag aufweisenden Bauteilen sind bekannt. Ganz allgemein spricht man hier von gebogenen Bauteilen, die durch entsprechend starke Rückbiegung gerichtet werden. Hierzu wird in der Regel das Werkstück auf zwei Stützen aufgelegt und es wird in dem Bereich der größten Durchbiegung zwischen den beiden Stützen eine ausreichend große, radial entgegengesetzt gerichtete Kraft auf das Werkstück ausgeübt solange, bis die entsprechende elastische Verformung überschritten und eine plastische Verformung eingesetzt hat. Das Ergebnis dieser Richtoperation wird dann nachgemessen und es wird die Richtoperation ggfls. an der gleichen Stelle oder an einer anderen Stelle und ggfls. auch mit anderen Kräften wiederholt, solange bis das Werkstück ausreichend gerade ist. Diese Art des Richtens hat jedoch den Nachteil, daß sich durch die Richtoperation ungünstige Beeinflussungen des inneren Spannungszustandes des Werkstückes ergeben, die dazu führen, daß das Werkstück nach der Richtoperation geringere mechanische Festigkeit und/oder geringere Dauerfestigkeit aufweist. Es ist sofort erkennbar, daß insbesondere solche Werkstücke, die einer dynamischen Beanspruchung unterworfen sind, durch eine Richtoperation nicht in ihrer Dauerfestigkeit gemindert werden dürfen, weil dies sonst bei der Dimensionierung der Werkstücke berücksichtigt werden müßte. Dies wiederum würde zu unwirtschaftlichen Abmessungen des Werkstückes führen. Eine befriedigende Richtmethode, die mindestens die Minderung der Dauerfestigkeit des gerichteten Werkstückes vermeidet. ist nicht bekannt. Die beschriebene Richtmethode des Standes der Technik hat ganz besonders negative Auswirkungen bei solchen Werkstücken, die einer Behandlung zur Steigerung der Dauerfestigkeit unterworfen wurden. Die beschriebene Richtmethode des Standes der Technik macht die durch die Vorbehandlung erzielte Dauerfestigkeitssteigerung des Werkstückes in aller Regel wieder vollständig zunichte, so daß diese genannte Bearbeitung sinnlos ist.

Der Erfindung liegt damit die Aufgabe zugrunde ein Verfahren vorzuschlagen, mit dem ein Werkstück gerichtet werden kann, ohne daß eine vorhandene oder durch eine Zusatzbearbeitung erreichte Dauerfestigkeit des Werkstückes gemindert wird. Eine weitere Aufgabe der Erfindung liegt darin, eine hierzu geeignete Vorrichtung vorzuschlagen.

Verfahrensmäßig wird die der Erfindung zugrunde liegende Aufgabe dadurch gelöst, daß örtlich begrenzt durch Verfestigung im Randschichtbereich des Werkstückes Druckeigenspannungen eingebracht werden mindestens zur Minderung des am Werkstück vorhandenen Schlages. Druckeigenspannungen im Randschichtbereich des Werkstücks können auf verschiedene und bekannte Art und Weise eingebracht werden. Als Beispiel hierfür sei genannt eine mehr oder weniger tief reichende sogen. Oberflächenhärtung, die z.B. als Einsatzhärtung oder als Induktionshärtung erfolgen kann oder auch eine Randschichthärtung mittels eines Laserstrahls.
Weiterhin kann Druckeigenspannung im Randschichtbereich durch Nitrieren erreicht werden. Ein weiteres Beispiel zum Einbringen von Druckeigenspannungen des Werkstücks ist das bekannte Festwalzverfahren.

Beim Einbringen der Druckeigenspannungen muß darauf geachtet werden, daß diese nicht durch das ganze Gefüge hindurch verlaufen, sondern in nennenswerter Größe ausschließlich im Randschichtbereich des Werkstückes auftreten. Die vorhandenen oder eingebrachten Druckeigenspannungen lösen eine entsprechende Verformung des Werkstückes aus. Hierbei hängt die Verformungsrichtung u.a. davon ab, in welchem Oberflächenbereich des Werkstückes Druckeigenspannungen in das Werkstück eingebracht werden. Die Verformungsgröße oder Richtgröße des Werkstückes hängt davon ab, wie stark diese Druckeigenspannungen sind und wie tief die Druckeigenspannungen in den Randschichtbereich hinein reichen. Um einen gewünschten Richteffekt zu erzielen, müssen hierbei die Druckeigenspannungen örtlich begrenzt in das Werkstück eingebracht werden. Dies kann geschehen beispielsweise durch einen örtlich begrenzten Induktionshärteprozeß oder durch einen örtlich begrenzten Festwalzvorgang. Hierbei kann die örtliche Begrenzung jede Art von örtlicher Begrenzung sein. So ist es beispielsweise bei Werkstücken mit einer Rotationsachse möglich, axial begrenzt, aber innerhalb der axialen Begrenzung um den gesamten Umfang herum, bis in eine gewünschte oder notwendige Tiefe, mit einer ausgewählten Härte zu härten, oder festzuwalzen mit einer ausgewählten spezifischen Walzkraft. Im Falle des Festwalzens ist hierbei eine weitere Möglichkeit der Einflußnahme noch die Anzahl der Überwalzungen.

Eine örtliche Begrenzung der Verfestigung im Randschichtbereich zur Einbringung von Druckeigenspannungen liegt auch dann vor, wenn z.B. in Umfangsrichtung nicht über den vollen Umfang gehärtet oder festgewalzt wird, unabhängig von der Größe der axialen Erstreckung, in welcher die Härtoperation oder Festwalzoperation durchgeführt wird. Es sollte jedoch ein Umfangswinkelbereich von indestens 10° behandelt werden, um einen nennenswerten Einfluß auf das Werkstück auszuüben.

Soweit Werkstücke, insbesondere Werkstücke mit einer Rotationsachse, z.B. Querschnittsübergange aufweisen, an deren Beginn Kerbwirkung auftritt, dann ist es günstig die Verfestigung im Randschichtbereich des Werkstückes zur Einbringung der Druckeigenspannungen in diesem Kerbbereich durchzuführen. Typische Beispiele hierfür sind die Übergangshohlkehlen an Achsschenkeln oder an Kurbelwellen oder an Nockenwellen oder ähnlichen Werkstücken. In solchen Bereichen kann sehr günstig gehärtet oder festgewalzt werden. Es ist hierbei auch einfach möglich diese Härtung oder den Festwalzvorgang zur Einbringung der Druckeigenspannungen im Bereich der Hohlkehle nicht über den gesamten Umfang der Hohlkehle durchzuführen, sondern nur über einen geeigneten begrenzten Winkelbereich, der aber, wie oben bereits ausgeführt, mindestens 10° betragen sollte.

Bei einfachen und z.B. rotationssymetrischen Werkstücken, wie z.B. abgesetzten Wellen, kann erwartet werden, daß dann, wenn in einem Kerbbereich, also z.B. in einer Übergangshohlkehle, Druckeigenspannungen über einen begrenzten Umfangswinkelbereich so eingebracht werden, daß sie in den beiden benachbarten Werkstückzonen auftreten, einen entsprechende Verformungsreaktion des Werkstückes in der Ebene eintritt, in der die Winkelhalbierende des Umfangswinkelbereiches liegt, in welchen die Druckeigenspannungen eingebracht wurden.

Bei komplexeren Bauteilen, wie z.B. einer Kurbelwelle, können zusätzlich die Größe, Form und Lage benachbarter Elemente der Kurbelwelle, wie z.B. der Kurbelwange, die Verformungsrichtung einer Verformungsbewegung beeinflussen, die durch das Einbringen von Druckeigenspannungen ausgelöst wurde. Solche Auswsirkungen können jedoch leicht empirisch ermittelt werden, so daß es immer gelingt, die Druckeigenspannungen einzubringen oder die Erhöhung der Druckeigenspannung vorzunehmen in einem solchen Umfangssektor, daß eine sinnrichtige Verformung der benachbarten Werkstückbereiche erfolgt. Es soll sich also die ursprünglich vorhandene Verformung und die durch das Richten bewirkte Verformung vektoriell so addieren, daß als Ergebnis mindestens ein kleinerer Schlag am Werkstück vorhanden ist.

Das erfindungsgemäße Verfahren zum Richten von Schlag aufweisenden Werkstücken durch Einbringung von Druckeigenspannungen in das Werkstück an zur Erzielung des Richteffektes geeigneten Stellen ist auch dann wirksam anwendbar, wenn das zu richtende Werkstück bereits vorverfestigt ist. In einem solchen Fall ist es jedoch erforderlich, daß mit solchen Werten gerichtet wird, die relativ zur bereits bestehenden Verfestigung an den gewünschten Bereichen größere Druckeigenspannungen und/oder tiefer reichende Druckeigenspannungen erzeugen. Dies ist beispielsweise bei Anwendung einer Festwalzoperation zum Richten bei bereits vorher zur Dauerfestigkeitssteigerung festgewalzten Werkstücken dadurch möglich, daß mit höherer spezifischer Walzkraft als bei der vorangegangenen Festwalzoperation gewalzt wird, oder aber daß mit gleicher spezifischer Walzkraft, aber höherer absoluter Walzkraft, gewalzt wird. Die höhere spezifische Walzkraft kann bei richtiger Auslegung der Walzrolle eine größere Tiefe der entstehenden Druckeigenspannungen vermeiden, aber die Druckeigenspannungen, die im Randschichtbereich bereits vorhanden sind, vergrößern. Dies kann beispielsweise erreicht werden mit einer Festwalzrolle kleineren Durchmessers relativ zu der Festwalzrolle mit der die erste Festwalzoperation durchgeführt wurde. Nach den Regeln der sogen. Hertzschen Pressung wird hierdurch die spezifische Walzkraft am Werkstück bei gleicher absoluter Walzkraft erhöht. Falls die Durchmesserverringerung der Walzrolle allein nicht ausreicht, kann auch noch eine Erhöhung der absoluten Kraft hinzukommen.

Umgekehrt ist bei einer Vergrößerung des Durchmessers der Walzrolle eine geringere Hertzsche Pressung und damit eine geringere spezifische Walzkraft am Werkstück zu erreichen. Durch Steigerung der absoluten Walzkraft kann wieder die spezifische Walzkraft erreicht werden, die ursprünglich auch mit der kleineren Rolle bei der vorangegangenen Festwalzoperation erreicht wurde. Damit wird erreicht, daß die Druckeigenspannungen im Randschichtbereich zwar nicht vergrößert werden aber tiefer in den Randschichtbereich hineinreichen. Hierbei ist es jeweils gleichgültig, ob die Verfestigungsoperation zur Steigerung der Dauerfestigkeit des Werkstückes der Richtoperation vorangegangen ist oder gleichzeitig mit der Richtoperation durchgeführt wird. Es ist lediglich erforderlich, die jeweilige Maßnahme, die zur Erhöhung der Dauerfestigkeit des Werkstückes eingesetzt wird, in ihren spezifischen Leistungsdaten als Ausgangslage für die notwendige Variation dieser Daten um örtlich begrenzt höhere Druckeigenspannungen einzubringen, anzusehen.
Wird z.B. im Bereich der Übergangshohlkehle eines Achsschenkels eine Festwalzoperation zur Steigerung der Dauerfestigkeit des Achsschenkels durchgeführt und hierbei festgestellt, daß der Achsschenkel Schlag einer bestimmten Größe in eine bestimmte Richtung weisend, hat, so ist es möglich, während der Festwalzoperation an der hierfür notwendigen Stelle beispielsweise die Festwalzkraft um einen erforderlichen Betrag über die bisherige Festwalzkraft hinaus zu steigern. Diese Kraftsteigerung wird hierbei in Umfangsrichtung nur über einen Teil des Umfangswinkels erforderlich und muß danach wieder zurückgenommen werden auf den Wert, der zur Erzielung der gewünschten Dauerfestigkeit durch die Festwalzoperation vorher angewendet wurde.
Analoges gilt für eine Härtung des als Beispiel genannten Achsschenkelbolzens.

Das erfindungsgemäße Richtverfahren ist besonders günstig in der Serienfertigung von immer gleichen Werkstücken anzuwenden. Betrachtet man z.B. die Serienfertigung einer ganz bestimmten Kurbelwelle, so stellt man fest, daß die verschiedenen, aufeinander folgenden Bearbeitungsarten zur Herstellung der Kurbelwelle bei dieser einen Schlag in ganz bestimmte Richtung und von ganz bestimmter, immer gleicher Größe erzeugen. Es kann dann sehr einfach durch Versuche zu Beginn der Serienfertigung ermittelt werden, an welchen Stellen und in welcher Größe Druckeigenspannungen eingebracht werden müssen, um an dieser Kurbelwelle den gewünschten Richteffekt zu erzielen. Sind die hierzu notwendigen Daten erst einmal bekannt, so können diese Daten von einer entsprechenden Einrichtung als festes Programm abgearbeitet werden. Die notwendige Einrichtung wird dann besonders einfach in ihrem Aufbau. In einem solchen Fall kann die Einrichtung auf entsprechende Prüfmittel und Meßmittel zur Erfassung des Ist-Zustandes der Kurbelwelle verzichten und es müssen auch keine Einrichtungen vorhanden sein, die das jeweilige Richtergebnis überprüfen. Eine Stichprobenkontrolle reicht hierfür volltändig aus.

Ganz allgemein ist es erforderlich zur Durchführung der Richtoperation mindestens einen Meßvorgang am Werkstück durchzuführen, bei welchem Schlagort, Schlaggröße sowie Schlagrichtung ermittelt wird. In Abhängigkeit der hierdurch ermittelten Daten wird dann die Richtoperation durchgeführt. Bei Kurbelwellen wird hierbei auch der Winkelbereich in Umfangsrichtung eines Kerbbereiches (Übergangshohlkehle) festgelegt an Haupt- und/oder Pleuellager, in dem eine Beeinflussung der Druckeigenspannung erfolgen soll.

Nach der ersten Durchführung einer Richtoperation kann das Ergebnis dieser Richtoperation ermittelt und dann bei Bedarf eine weitere Richtoperation mit angepaßten Richtdaten durchgeführt werden. Hierbei bedeutet "angepaßte Richtdaten" daß die spezifische Walzkraft, die absolute Walzkraft, die Anzahl der Überwalzungen oder die Drehwinkellage der Einwirkrichtung der Walzkraft, oder die axiale Lage des Ortes der Einwirkung der Walzkraft je nach Bedarf einzeln oder in Kombination geändert werden. Analoges gilt für den Fall, daß die notwendigen Druckeigenspannungen über ein Härteverfahren eingebracht werden. Hierbei können die jeweiligen Größen der gewünschten Änderungen fest vorgegeben sein, so daß immer konstante Änderungsschritte erfolgen. Es ist aber auch möglich, die Art und Größe einer notwendigen Änderung vom Ergebnis der vorangegangenen Richtoperation abhängig zu machen. Hierzu muß eine zugeordnete Einrichtung über entsprechende Verformungsmeßsysteme verfügen. Ein zugeordneter Rechner kann dann, aus dem Ergebnis einer vorangegangenen Richtoperation Stufe für Stufe lernend, die Parameter einer nächsten Richtoperation festlegen und einer entsprechenden Maschinensteuerung zuführen.

Beim erfindungsgemäßen Richten von insbesondere zylindrischen, langgestreckten Werkstücken wird vorgeschlagen, daß jeweils auf die der Durchbiegungsrichtung abgewandten Oberflächenseite (also sozusagen auf der Innenseite des Bogens) die Druckeigenspannungen durch eine Walzoperation eingebracht werden. Diese Walzoperation kann als Einstichwalzen oder auch als Walzen im Vorschubverfahren durchgeführt werden.

Mit dem erfindungsgemäßen Verfahren können auch sehr vorteilhaft Kurbelwellen gerichtet werden. Hierbei ist es besonders vorteilhaft, wenn an der zu richtenden Kurbelwelle an mehreren Stellen der Schlag gemessen und im Bereich des größten Schlages mit der Richtoperation begonnen wird.

Zur Durchführung des erfindungsgemäßen Verfahrens ist eine Einrichtung notwendig, die mindestens eine an einem Maschinenständer angeordnete Werkstückspanneinrichtung aufweist. Um die notwendige Richtoperation durchzuführen, müssen weiterhin Mittel zur Beeinflussung der Druckeigenspannungen in einem Randschichtbereich des Werkstückes, Mittel zur Erzeugung einer Relativbewegung zwischen Werkstück und dem Mittel zur Beeinflussung der Druckeigenspannung und weiterhin Mittel zur Positionserfassung zwischen dem Werkstück und dem letztgenannten Mittel sowie Mittel zur Steuerung der Mittel zur Beeinflussung der Druckeigenspannungen und der Relativbewegung zwischen diesem und dem Werkstück in Abhängigkeit von den Daten der Mittel zur Positionserfassung und weitere Daten, die den Ort und die Größe der einzubringenden Druckeigenspannungen bestimmen, vorhanden sein.

Soweit die Druckeigenspannungen durch eine Walzoperation eingebracht werden sollen, muß als Mittel zur Beeinflussung der Druckeigenspannungen ein kraftbetätigtes Walzwerkzeug mit mindestens einer Walzrolle sowie eine Einrichtung zur Steuerung der Walzkraft vorgesehen sein. Durch eine Relativbewegung zwischen Rolle und Werkstück, erzeugt durch eine Drehbewegung des Werkstückes, kann der notwendige Walzprozeß durchgeführt werden. Weiterhin können noch weggesteuerte, Verfahrbare Tragmittel zur Erzeugung einer weiteren Relativbewegung zwischen Werkstück und Walzwerkzeug nach einem vorbestimmbaren Bewegungablauf und in vorbestimmbare Positionen vorhanden sein. Es kann bei einzelnen Walzwerkzeugen nämlich notwendig sein, jedes vorhandene Walzwerkzeug mit der Walzrolle in eine axial richtige Position zu bringen und das Walzwerkzeug dann durch eine Radialbewegung, mindestens der Walzrolle auf das Werkstück zu, zur Anlage an das Werkstück zu bringen. Sodann muß über die Steuerung der Walzkraft die richtige Walzkraft sowie der richtige Walzkraftwechsel gesteuert werden um den gewünschten Richteffekt zu erzielen.

Vorteilhafterweise ist an einer Einrichtung zur Durchführung des erfindungsgemäßen Verfahrens gleichzeitig mindestens ein Meßelemente enthaltendes Verformungsmeßsystem zur Erfassung des Werkstückschlages an vorbestimmten oder vorbestimmbaren Positionen vorhanden, wobei das Verformungsmeßsystem mit einer Datenauswerteeinrichtung und diese wiederum mit einer Maschinensteuerung verbunden ist. Hierdurch kann der Zustand des Werkstückes direkt in der Richteinrichtung überprüft und hierdurch die Richtdaten festgelegt und bei Bedarf auch laufend korrigiert werden.

Bei der Einrichtung zur Durchführung des erfindungsgemäßen Verfahrens können die Mittel zur Beeinflussung der Druckeigenspannungen des Werkstückes auch als Härteeinrichtungen zum Härten des Randschichtbereiches des Werkstückes ausgebildet sein. Hierzu kann beispielsweise eine Induktionsspule zur Erhitzung des Werkstückes dienen. Die nachfolgende Abkühlung zur Erreichung der notwendigen Härtesteigerung im Randschichtbereich des Werkstückes kann an der Luft erfolgen oder aber mittels zusätzlicher Kühleinrichtungen erfolgen. Dies hängt von der Werkstoffart des Werkstückes ab. Die Härteeinrichtung muß hierbei so ausgebildet sein, daß sowohl die Härte an sich als auch die Härtetiefe im Randschichtbereich des Werkstückes beeinflußbar ist. Die Technik des Härtens im Randschichtbereich eines Werkstückes als solche ist bekannt und es ist hierbei auch bekannt, welche Parameter verändert werden müssen um eine größere Härte im Randschichtbereich oder eine größere bzw. kleinere Härtetiefe im Randschichtbereich zu erreichen. Hierauf muß daher an dieser Stelle nicht gesondert eingegangen werden. Entsprechende Mittel zur Steuerung der Härte als solcher, der Härtetiefe sowie auch des Härteortes, sollen daher zur Erreichung eines optimalen Richtergebnisses an der erfindungsgemäßen Einrichtung vorgesehen sein.

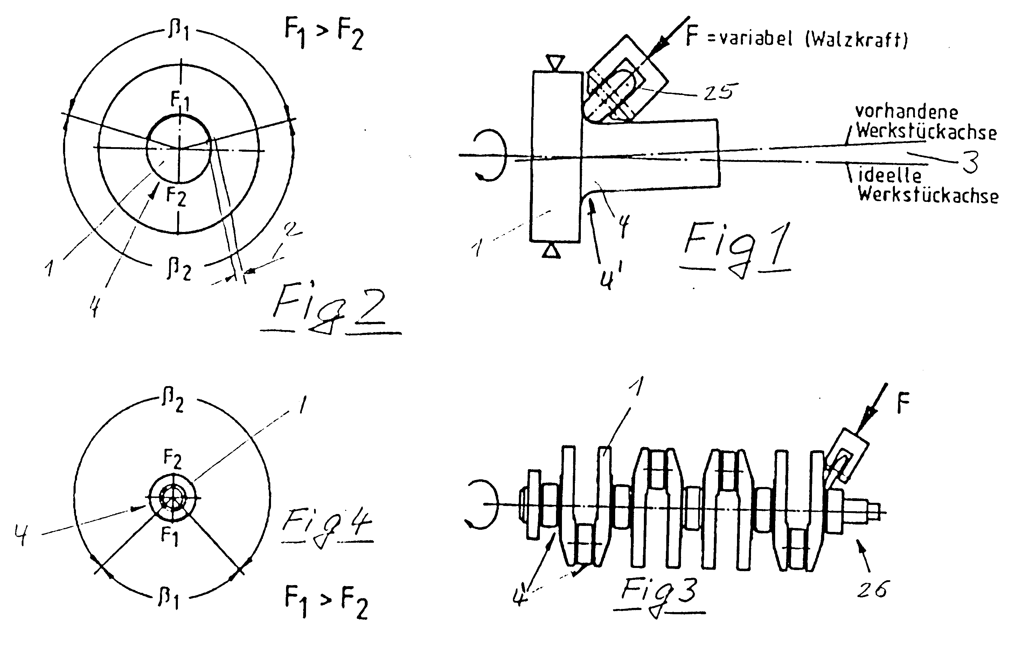

Die Figuren 1 bis 5 verdeutlichen die wesentlichen Prinzipien des erfindungsgemäßen Verfahrens und den prinzipiellen Aufbau einer Einrichtung zur Durchführung des erfindungsgemäßen Verfahrens.

In Figur 1 und 2 ist als Werkstück 1 eine einfache abgesetzte Welle gezeigt, die z.B. ein Teil eines Achsschenkels, wie er im Bereich der gelenkten Räder eines Kraftfahrzeugs verwendet wird, sein kann. Dieses Werkstück 1 weist einen Schlag 3 auf, der gerichtet werden soll. Zur Einbringung der notwendigen Druckeigenspannungen wird das Festwalzverfahren gewählt. Hierbei wird eine Walzrolle 25 in den Kerbbereich 4', also in die Übergangshohlkehle der Umfangsfläche 4 eingedrückt. Hierbei wird die Walzrolle 25 mit der Kraft F, wirkend in Richtung des in Figur 1 hierzu dargestellten Pfeils, belastet. Die Wirkrichtung der Kraft F geht hierbei durch den Radienmittelpunkt des Übergangsradius.
Zur Einbringung der notwendigen Druckeigenspannungen wird eine Kraft F 1 über den Winkelbereich Beta 1 aufgebracht, während über den Winkelbereich Beta 2 die kleinere Kraft F 2 angewendet wird. Da die Kraft F 1 größer als die Kraft F 2 ist, werden im Winkelbereich Beta 1, in dem die Kraft F 1 wirkt, höhere Druckeigenspannungen in das Werkstück eingebracht, wodurch der Schlag 3 verkleinert und auch zu Null gemacht werden kann. Die Druckeigenspannungen werden hierbei nur in den Randschichtbereich 2 eingebracht. Es kann hierbei auch die Kraft F 2, die auf die Umfangsfläche 4 einwirkt, bereits so groß sein, daß ein Festwalzeffekt mit einer gewünschten Dauerfestigkeitssteigerung des Werkstückes erreicht wird. Zur Durchführung des Richteffektes ist es dann jedoch erforderlich, daß die im Winkelbereich Beta 1 wirkende Kraft F 1 ausreichend größer ist als die Kraft F 2. Bei gleichbleibenden Abmessungen der Walzrolle 25 wird mit den Kräften F 1 bzw. F 2 eine ganz bestimmte spezifische Walzkraft im Bereich der Umfangsfläche 4 des Werkstückes 1 von der Walzrolle 25 erzeugt. Um die Druckeigenspannungen im Randschichtbereich 2 des Werkstückes zu erhöhen, muß diese spezifische Walzkraft erhöht werden. Dies kann dadurch geschehen, daß z.B. die Walzrolle 25 einen kleineren Durchmesser erhält (Hertzsche Flächenpressung). Bei gleicher Kraft F 1 bzw. F 2 ergibt sich hierdurch eine größere spezifische Walzkraft mit einer entsprechend vergrößerten Druckeigenspannung im Werkstück, ohne daß diese Druckeigenspannung tiefer in den Randschichtbereich 2 hineinreicht. Wird hingegen bei gleichem Durchmesser der Walzrolle 25 die Kraft F 1 bzw. F 2 vergrößert, so ergibt sich ebenfalls eine höhere spezifische Walzkraft und damit eine höhere Druckeigenspannung im Werkstück. Diese höhere Druckeigenspannung reicht jedoch tiefer in den Randschichtbereich 2 hinein.

Es ist aber auch möglich bei gleicher Druckeigenspannung eine größere Tiefe dieser Druckeigenspannung zu erzeugen. Dies bedeutet, daß eine größere Dicke des Randschichtbereiches 2 entsprechende Druckeigenspannungen aufweist. Dies kann dadurch erreicht werden, daß der Durchmesser der Walzrolle 25 vergrößert und die Kraft F 1 bzw. F 2 so gesteigert wird, bis die ursprünglich vorgesehene spezifische Walzkraft wieder erreicht ist. Damit erreicht auch die Druckeigenspannung im Werkstück den ursprünglich vorgesehenen Wert, dies jedoch über eine größere Tiefe bzw. Dicke des Randschichtbereiches 2.

Anstelle der Walzrolle 25 könnte auch eine Härteeinrichtung vorgesehen sein, beispielsweise eine Härteeinrichtung, die sich zur lokalen Erhitzung des Werkstückes eines Laserstrahls entsprechender Energie bedient.

Durch eine Härtung des Randschichtbereiches des Werkstückes im selben Bereich, in dem auch die Walzrolle 25 arbeitet, werden ebenfalls entsprechend vergrößerte Druckeigenspannungen in das Werkstück eingebracht und damit der gewünschte Richteffekt erzielt. Die Größe des Richteffektes kann hierbei wieder beeinflußt werden über die Größe der Härte als solche und/oder über die Eindringtiefe der Härte in den Randschichtbereich 2.

Sowohl die Aufhärtung bei der Durchführung eines Richtprozesses als auch die Festwalzoperation bei der Durchführung eines Richtprozesses, können an einem Werktück durchgeführt werden, das in diesen Bereichen, in denen die höheren Druckeigenspannungen eingebracht werden sollen, bereits durch eine vorangegangene Härtung oder Festwalzoperation verfestigt sind. Es ist hierbei lediglich erforderlich, dann die entsprechenden Parameter für die nachfolgende Härteoperation oder Festwalzoperation, mit denen ein Richteffekt bewirkt werden soll, zu erhöhen so, daß in den gewünschten Bereichen auch tatsächlich höhere Druckeigenspannungen in das Werkstück eingebracht werden. Über welchen Winkelbereich Beta 1 dies zu erfolgen hat, kann durch einfache Versuche leicht ermittelt werden.

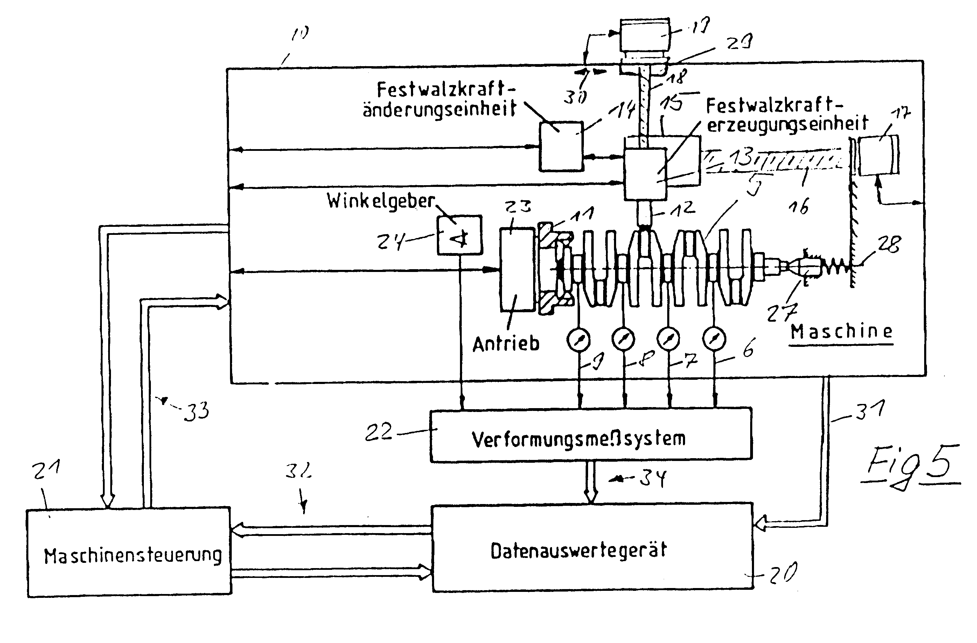

Das gleiche bisher beschriebene Verfahren kann natürlich auch besonders vorteilhaft dann angewendet werden, wenn das Werkstück 1 eine Kurbelwelle ist. Dies ist in den Figuren 3 und 4 angedeutet. Das Wellenende 26 der Kurbelwelle 1 sei in umgekehrter Richtung abgebogen wie der Wellenzapfen des Achsschenkels nach Figur 1. Auch dieses Wellenende 26 kann wieder beispielsweise durch eine Festwalzoperation gerichtet werden. Die Walzrolle wird hierbei, wie in Figur 3 dargestellt, im Kerbbereich 4' angesetzt und es wird im Winkelbereich Beta 1 mit einer entsprechend großen Walzkraft F 1 gewalzt. Soweit im gesamten Kerbbereich 4' der Kurbelwelle 1 bereits eine Festwalzoperation durchgeführt wurde, muß die Kraft F 1 entsprechend größer sein als die für die Festwalzoperation im Winkelbereich Beta 2 verwendete Kraft F 2. Es gilt jedoch auch hier das zu Figur 1 Beschriebene. Die Walzoperation kann nämlich auch hier durch eine entsprechende Härteoperation ersetzt werden.

Der schematische Aufbau einer zur Durchführung des erfindungsgemäßen Verfahrens geeigneten Maschine ist in Figur 5 dargestellt. Ein Maschinenständer 10 weist einen Werkstückrotationsantrieb 23 mit einer Werkstückspanneinrichtung 11 auf. Als Gegenhalteeinrichtung für das als Kurbelwelle ausgebildete Werkstück 5 kann eine Körnerspitze 27 vorgesehen sein. Die Drehwinkelstellung des Werkstückrotationsantriebs und damit des Werktückes, wird von einem Winkelgeber 24 überwacht, der seine Information an ein Verformungsmeßsystem 22 weiterleitet. In der Werkstückspanneinrichtung 11 kann hierbei dafür gesorgt sein, daß die Kurbelwelle 5 in einer bekannten Drehwinkellage in die Werkstückspanneinrichtung 11 eingesetzt wird.

Das Verformungsmeßsystem 22 weist weiter die Meßstellen 6 bis 9 auf, die an vorbestimmten oder vorbestimmbaren Stellen der Kurbelwelle 5 -im Ausführungsbeispiel nach Figur 5 sind dies die Hauptlager der Kurbelwelle- den Schlag der Kurbelwelle 5 seiner in radialer Richtung gerichteten Größe nach bestimmten. Diese Meßstellen leiten ihre Information ebenfalls an das Verformungsmeßsystem 22 weiter, das hierdurch in Verbindung mit dem Winkelgeber 24 in der Lage ist, auch die Drehwinkellage des gemessenen Schlages zu bestimmen.

Weiterhin ist ein Walzwerkzeug 12 mit einer Walzkrafterzeugungseinrichtung 13 verbunden. Solche Walzwerkzeuge, mit denen die Übergangshohlkehlen an den Lagern von Kurbelwellen gewalzt werden können und die dazugehörige Walzkrafterzeugungseinrichtung sind Stand der Technik, so daß hierauf nicht näher eingegangen werden muß.

Die Festwalzkrafterzeugungseinheit 13 ist auf einem Tragmittel 15 angeordnet und kann von diesem z.B. über eine Kugelrollspindel 16 mit dazugehörigem Spindelantrieb 17 entlang der Werkstückachse 28 verfahren werden. Der Spindelantrieb 17 verfügt über einen Drehmelder, so daß eine Information über die jeweilige Position des Tragmittels 15 vorliegt, wodurch das Tragmittel 15 positionierbar wird. Die Festwalzkrafterzeugungseinheit 13 kann auch stationär angeordnet sein, wenn immer an der gleichen axialen Stelle des Werkstückes gewalzt wird. Dies ist auch bei einer Mehrfachanordnung solcher Einheiten möglich.

Die Walzkrafterzeugungseinheit 13 ihrerseits ist ebenfalls über eine Kugelrollspindel 18 mit entsprechendem Spindelantrieb 19 in zur Werkstückachse 28 radialer Richtung verfahrbar. Um die gleichzeitige Axialbewegung zur ermöglichen, ist der Spindelantrieb 19 auf einem in Richtung des Pfeils 30 verfahrbaren Schlitten 29 angeordnet. Der Spindelantrieb 19 verfügt hierbei ebenfalls über einen Drehmelder, so daß auch die radiale Position der Walzkrafterzeugungseinrichtung 13 mit dem Walzwerkzeug 12 bekannt und damit auch positionierbar ist.

Die Daten der Meßstelle 6 bis 9 sowie des Winkelgebers 24 werden über das Verformungsmeßsystem 22 dem Datenauswertegerät 20 zugeführt. Das Datenauswertegerät 20 erhält über die Leitung 31 laufend Information über die jeweils momentane Position der Walzkrafterzeugungseinrichtung 13 sowie des Tragmittels 15. Die nicht näher bezeichneten Drehmelder der Spindelantriebe 17 und 19 liefern die entsprechenden Daten.

Zur Walzkraftsteuerung ist die Walzkrafterzeugungseinrichtung 13 verbunden mit einer Walzkraftsteuereinrichtung 14. Mit dieser Walzkraftsteuereinrichtung 14 kann bei Bedarf die Walzkraft auch im Verlaufe jeder einzelnen Umdrehung variiert werden. Wie die Beschreibung zu den Figuren 1 bis 4 verdeutlicht, ist dies auch häufig notwendig.

Das Datenauswertegerät 20 tauscht noch Daten aus mit der Maschinensteuerung 21, die im Verbund mit dem Datenauswertegerät 20 die Steuerung der gesamten Maschine sowohl hinsichtlich der Positionen der einzelnen Bauteile als auch hinsichtlich Drehzahl, Überwalzzahl, Festwalzkraft und Festwalzkraftänderung sowie Folge der Richtorte steuert. Soweit im Datenauswertegerät 20 ein Rechner vorhanden ist, kann dieser auch frei programierbar ausgebildet sein. Es ist dann möglich unterschiedliche vorprogrammierte Richtabläufe durchzuführen oder aber, wenn der Zustand des Werkstückes in der Maschine erfaßt wurde oder bekannt ist, eine dem Einzelzustand des Werkstückes entsprechende Richtoperation durchzuführen. Der notwendige Datenaustausch zwischen dem Datenauswertegerät mit Rechner, der Maschinensteuerung und der Maschie selbst, erfolgt hierbei über die Leitungen 32 und 33. Die Leitungen 31 und 34 liefern hierbei dem Datenauswertegerät 20 lediglich Daten zu. Die einzelnen Verbindungen und Verbindungsrichtungen zwischen den Einrichtungen der Maschine selbst und den zugehörigen peripheren Geräten sind in Figur 5 durch die dünn ausgezogenen Pfeillinien angedeutet.

Die erfindungsgemäße Einrichtung kann durchaus aus mehreren unabhängigen Einheiten bestehen. So kann z.B. das Verformungsmeßsystem eine solche unabhängige Einheit bilden, der eine unabhängige Richteinheit nachgeordnet ist. Diese Richteinheit wiederum kann als Härtemaschine aber auch als Walzmaschine ausgebildet sein. Außer den genannten unabhängigen Einheiten kann wiederum z.B. eine unabhängige Härtemaschine oder Festwalzmaschine angeordnet sein, mit der vor dem Richten gewünschte Festigkeitseigenschaften des Werkstückes erzielt werden. Diese sollte jedoch zweckmäßigerweise dem Verformungsmeßsystem vorangestellt sein, weil eine Verformung des Werkstückes, ausgelöst durch die Härteoperation oder Festwalzoperation, zu erwarten ist.

### Liste der verwendeten Bezugszeichen

- 1: Werkstück
- 2: Randschichtbereich
- 3: Schlag
- 4: Umfangsfläche
- 4': Kerbbereich
- 5: Kurbelwelle
- 6: Meßstelle
- 7: Meßstelle
- 8: Meßstelle
- 9: Meßstelle
- 10: Maschinenständer
- 11: Werkstückspanneinrichtung
- 12: Walzwerkzeug
- 13: Walzkrafterzeugungseinrichtung
- 14: Walzkraftsteuereinrichtung
- 15: Tragmittel
- 16: Spindel
- 17: Spindelantrieb mit Drehmelder
- 18: Spindel
- 19: Spindelantrieb mit Drehmelder
- 20: Datenauswertegerät
- 21: Maschinensteuerung
- 22: Verformungsmeßsystem
- 23: Werkstückrotationsantrieb
- 24: Winkelgeber
- 25: Walzrolle
- 26: Wellenende
- 27: Körnerspitze
- 28: Werkstückachse
- 29: Schlitten
- 30: Pfeil
- 31: Leitung
- 32: Leitungen
- 33: Leitungen
- 34: Leitungen

## Patentansprüche

1. Verfahren zum Richten von Schlag aufweisenden Werkstücken mit einer Rotationsachse, dadurch gekennzeichnet, daß örtlich begrenzt ( Beta 1) durch Verfestigung im Randschichtbereich (2) des Werkstückes (1) im verfestigten Bereich Druckeigenspannungen eingebracht werden, mindestens zur Minderung des Schlages (3).

2. Verfahren nach Anspruch 1, dadurch gekennzeichnet, daß eine Einbringung von Druckeigenspannungen mindestens über einen Teil (Beta 1) einer Umfangsfläche (4) des Werkstückes (1) durchgeführt wird.

3. Verfahren mindestens nach Anspruch 2, dadurch gekennzeichnet, daß die Einbringung von Druckeigenspannungen in einem Kerbbereich (4') des Werkstückes (1) durchgeführt wird.

4. Verfahren nach mindestens einem der Ansprüche 1 bis 3, dadurch gekennzeichnet, daß die Einbringung von Druckeigenspannungen durch eine Festwalzoperation durchgeführt wird.

5. Verfahren nach mindestens einem der Ansprüche 1 bis 3, dadurch gekennzeichnet, daß die Einbringung von Druckeigenspannungen durch eine Härteoperation im Randschichtbereich (2) durchgeführt wird.

6. Verfahren nach mindestens einem der Ansprüche 1 bis 5, dadurch gekennzeichnet, daß die Dicke des Randschichtbereiches (2), in welchen Druckeigenspannungen eingebracht werden, und/oder die Größe der aufgebrachten Druckeigenspannungen zur Beeinflussung des Schlages variiert werden.

7. Verfahren nach mindestesn einem der Ansprüche 1 bis 6, dadurch gekennzeichnet, daß die Einbringung von Druckeigenspannungen durch Laserstrahlen erfolgt.

8. Verfahren nach mindestens einem der Ansprüche 1 bis 7, dadurch gekennzeichnet, daß bei einer bestehenden Verfestigung des Werkstückes (1) mit solchen Werte gerichtet wird, die relativ zur bestehenden Verfestigung größere Druckeigenspannungen und/oder tiefer in die Randschicht reichende Druckeigenspannungen erzeugen.

9. Verfahren mindestens nach Anspruch 8, dadurch gekennzeichnet, daß die Verfestigungsoperation der Richtoperation vorangegangen ist.

10. Verfahren mindestens nach Anspruch 8, dadurch gekennzeichnet, daß die Verfestigungsoperation und die Richtoperation zeitgleich durchgeführt werden.

11. Verfahren nach mindestens einem der Ansprüche 1 bis 10, dadurch gekennzeichnet, daß der Ausgangszustand eines Werkstückes (1) mindestens hinsichtlich der Größe und Richtung des Schlages mindestens stichprobenartig ermittelt und in Abhängigkeit hiervon die Richtdaten festgelegt und die Werkstücke mit diesen Richtdaten gerichtet werden.

12. Verfahren nach mindestens einem der Ansprüche 1 bis 11, dadurch gekennzeichnet, daß durch mindestens einen Meßvorgang an mindestens einem Schlagort Schlaggröße sowie Schlagrichtung ermittelt und in Abhängigkeit dieser Werte die Richtoperation durchgeführt wird.

13. Verfahren mindestens nach Anspruch 12, dadurch gekennzeichnet, daß das Ergebnis einer vorangegangenen Richtoperation ermittelt und bei Bedarf eine weitere Richtoperation mit angepaßten Richtdaten durchgeführt wird.

14. Verfahren mindestens nach Anspruch 13, dadurch gekennzeichnet, daß bei Durchführung von mehr als zwei Richtoperationen am gleichen Werkstück und dort am gleichen Richtort die Anpassungssprünge konstant gehalten werden.

15. Verfahren nach mindestens einem der Ansprüche 1 bis 14, insbesondere zur Anwendung an Kurbelwellen, abgesetzten Wellen, Nockenwellen oder ähnlichen Werkstücken (1), dadurch gekennzeichnet, daß die Druckeigenspannungen im Bereich mindestens einer Übergangshohlkehle (4') eingebracht werden.

16. Verfahren nach mindestens einem der Ansprüche 1 bis 14, insbesondere zur Anwendung an zylindrischen Werkstücken, dadurch gekennzeichnet, daß jeweils auf die der Durchbiegungsrichtung abgewandten Oberflächenseite die Druckeigenspannungen durch eine Walzoperation eingebracht werden.

17. Verfahren nach mindestens einem der Ansprüche 1 bis 16, dadurch gekennzeichnet, daß bereits verfestigte Werkstücke (1) zur Durchführung der Richtoperation im verfestigten Bereich örtlich begrenzt (Beta 1) mit größerer Intensität verfestigt werden, wobei die Verfestigungsintensität im wesentlichen beeinflußt wird durch mindestens einen der folgenden Parameter, nämlich die spezifische Walzkraft, die absolute Walzkraft, die Überwalzzahl und die Walzgeschwindigkeit bzw. Stromstärke, Abstand des Wärmeerzeugers von der Werkstückoberfläche, Lichtenergie und Abkühlungsintensität.

18. Verfahren mindestens nach Anspruch 16, dadurch gekennzeichnet, daß bei einer Kurbelwelle (5) an mehreren Stellen (6-9) mindestens die Schlagrichtung gemessen und im Bereich des größten Schlages mit der Richtoperation begonnen wird.

19. Verfahren nach mindestens einem der Ansprüche 1 bis 18 zum Richten von Kurbelwellen, dadurch gekennzeichnet, daß im Kerbbereich zwischen Lagerzapfen und Kurbelwellenwange die Erhöhung der Druckeigenspannungen in einem solchen Umfangssektor vorgenommen wird, daß eine sinnrichtige Verformung der Kurbelwellenwange erfolgt.

20. Verfahren nach mindestens einem der Ansprüche 1 bis 19, dadurch gekennzeichnet, daß in Abhängigkeit von Schlaggröße, Schlagrichtung und Schlagort der Winkelbereich in Umfangsrichtung eines Kerbbereiches an einem Haupt- und/oder Pleuellager des Werkstückes, insbesondere der Kurbelwelle, bestimmt wird, in dem eine Beeinflussung der Druckeigenspannung erfolgen soll.

21. Verfahren nach mindestens einem der Ansprüche 1 bis 20, dadurch gekennzeichnet, daß so gerichtet wird, daß eine vektorielle Addition des vorhandenen Schlages und der Verformung durch die Richtoperation erfolgt derart, daß sich mindestens eine Minderung des Schlages ergibt.

22. Einrichtung zur Durchführung des Verfahrens nach mindestens einem der Ansprüche 1 bis 21 zum Richten von Schlag aufweisenden Werkstücken (1,5), mindestens enthaltend eine an einem Maschinenständer (10) angeordnete Werkstückspanneinrichtung (11), gekennzeichnet durch Mittel (12,13,14,) zur Beeinflussung der Druckeigenspannungen in einem Randschichtbereich (2) des Werkstückes (5), Mittel (13,15-19) zur Erzeugung einer Relativbewegung zwischen Werkstück (5) und dem Mittel (12,14) zur Beeinflussung der Druckeigenspannung, Mittel (17,19,20) zur Positionserfassung zwischen dem Werkstück (5) und dem letztgenannten Mittel (12,14) sowie Mittel (21) zur Steuerung der Mittel (12,14) zur Beeinflussung der Druckeigenspannungen und der Relativbewegung zwischen diesem und dem Werkstück (5) in Abhängigkeit von den Daten der Mittel (17,19,20) zur positionserfassung und weiterer Daten, die den Ort und die Größe der einzubringenden Druckeigenspannungen bestimmen.

23. Einrichtung nach Anspruch 22, gekennzeichnet durch mindestens ein kraftbetätigtes (13) Walzwerkzeug (12) mit mindestens einer Walzrolle (25), sowie einer Einrichtung (14) zur Steuerung der Walzkraft.

24. Einrichtung mindestens nach Anspruch 23 gekennzeichnet durch verfahrbare Tragmittel (15) zur Erzeugung einer Relativbewegung zwischen Werkstück (5) und Walzwerkzeug (12) nach einem vorbestimmbaren Bewegungsablauf und in vorbestimmbare Positionen.

25. Einrichtung mindestens nach Anspruch 23, gekennzeichnet durch mindestens ein Meßelemente enthaltendes Verformungsmeßsystem (22) zur Erfassung mindestens der Schlagrichtung des Werkstückschlages (3) an vorbestimmten und/oder vorbestimmbaren Positionen, wobei das Verformungsmeßsystem (22) mit einer Datenauswerteeinrichtung (20) und dieses wiederum mit einer Maschinensteuerung (21) verbunden ist.

26. Einrichtung nach mindestens einem der Ansprüche 22 bis 25 gekennzeichnet durch einen Werkstückrotationsantrieb (23), verbunden mit einem Winkelgeber (24), wobei der Winkelgeber (24) seinerseits verbunden ist mit dem verformungsmeßsystem (22).

27. Einrichtung mindestens nach Anspruch 26, gekennzeichnet durch mindestens einen Winkelgeber zur Beeinflussung der Mittel zur Beenflussung der Druckeigenspannungen.

28. Einrichtung nach mindestens einem der Ansprüche 22 bis 27, dadurch gekennzeichnet, daß die Tragmittel (15) mindestens ein kraftbetätigtes Walzwerkzeug (12) tragen.

29. Einrichtung nach mindestens einem der Ansprüche 22 bis 28, dadurch gekennzeichnet, daß Tragmittel (15) sowohl für eine Radialbewegung als auch für eine Axialbewegung relativ zum Werkstück (5) vorgesehen sind.

30. Einrichtung nach mindestens einem der Ansprüche 22 bis 29, dadurch gekennzeichnet, daß ein mit der Maschinensteuerung (21) verbundener programmierbarer Rechner vorgesehen ist, zur Verarbeitung eines Richtprogrammes für das Werkstück (5) und zur sinnentsprechenden Beeinflussung der das Programm abarbeitenden Maschineneinrichtungen.

31. Einrichtung mindestens nach Anspruch 22, dadurch gekennzeichnet, daß die Mittel zur Beeinflussung der Druckeigenspannung als Induktionshärteeinrichtung ausgebildet sind.

32. Einrichtung mindestens nach Anspruch 22, dadurch gekennzeichnet, daß die Mittel zur Beeinflussung der Druckeigenspannung als Laserstrahlhärteeinrichtung ausgebildet sind.

33. Einrichtung mindestens nach Anspruch 31, dadurch gekennzeichnet, daß Mittel zur Steuerung mindestens eines der folgenden Parameter, nämlich der Härte als solcher, der Härtetiefe und des Härteortes vorgesehen sind.

34. Einrichtung nach mindestens einem der Ansprüche 22 bis 33, dadurch gekennzeichnet, daß die Einrichtung mindestens die unabhängigen Einheiten Verformungsmeßsystem und Einrichtung zum Richten aufweist.

35. Einrichtung mindestens nach Anspruch 34, dadurch gekennzeichnet, daß mindestens die unabhängigen Einheiten Verformungsmeßsystem und Einrichtung zum Richten über Datenaustauschmittel miteinander verbunden oder verbindbar sind.

36. Einrichtung mindestens nach einem der Ansprüche 34 und 35, dadurch gekennzeichnet, daß eine unabhängige Festwalzeinrichtung oder Härteeinrichtung vorgesehen ist.

## Claims

1. Process for the straightening of workpieces which have an axis of rotation and which are out of true, characterised in that locally limited (Beta 1) compressive internal stresses are introduced into a peripheral zone (2) of the workpiece (1) by strengthening of said peripheral zone, at least to reduce the misalignment (3).

2. Process according to claim 1, characterised in that an introduction of compressive internal stresses is carried out at least over a part (Beta 1) of a circumferential surface (4) of the workpiece (1).

3. Process at least according to claim 2, characterised in that the introduction of compressive internal stresses is carried out in a grooved region (4') of the workpiece (1).

4. Process according to at least one of claims 1 to 3, characterised in that the introduction of compressive internal stresses is carried out by a solid rolling operation.

5. Process according to at least one of claims 1 to 3, characterised in that the introduction of compressive internal stresses is carried out by a tempering operation in the peripheral zone (2).

6. Process according to at least one of claims 1 to 5, characterised in that the density of the peripheral zone (2) into which compressive internal stresses are introduced, and/or the magnitude of the imposed compressive internal stresses, is/are varied in order to influence the misalignment.

7. Process according to at least one of claims 1 to 6, characterised in that the introduction of compressive internal stresses is effected by laser radiation.

8. Process according to at least one of claims 1 to 7, characterised in that the strengthening of the workpiece (1) is effected with such values which, relative to the original strength, produce greater compressive internal stresses and/or compressive internal stresses extending deeper into the surface layer.

9. Process at least according to claim 8, characterised in that the strengthening operation precedes the alignment operation.

10. Process at least according to claim 8, characterised in that the strengthening operation and the alignment operation are carried out simultaneously.

11. Process according to at least one of claims 1 to 10, characterised in that the initial condition of a workpiece (1), at least in respect of the magnitude and direction of the misalignment, is determined at least by sensing probe means and in dependence thereon the alignment data are established and the workpiece is realigned using this alignment data.

12. Process according to at least one of claims 1 to 11, characterised in that by means of at least one measuring process at at least one position of misalignment the magnitude as well as the direction of misalignment is determined and the realignment operation is carried out in dependence upon these values.

13. Process at least according to claim 12, characterised in that the result of a preceding straightening operation is determined and, as necessary, a further straightening operation is carried out with modified alignment data.

14. Process at least according to claim 13, characterised in that in the carrying out of more than two straightening operations on the same workpiece and at the same position the modifying shifts are maintained constant.

15. Process according to at least one of claims 1 to 14, particularly for use on crankshafts, offset shafts, cam shafts or similar workpieces (1), characterised in that the compressive internal stresses are introduced in the region of at least one transition zone (4').

16. Process according to at least one of claims 1 to 14, particularly for use on cylindrical workpieces, characterised in that the compressive internal stresses are introduced by a rolling operation into the surface side remote from the direction of flexure.

17. Process according to at least one of claims 1 to 16, characterised in that already strengthened workpieces (1) are strengthened with greater intensity in the strengthened region in a locally limited manner (Beta 1) for carrying out the straightening operation, wherein the strengthening intensity is influenced substantially by at least one of the following parameters, namely the specific rolling force, the absolute rolling force, the number of rolling turns and the rolling speed as well as electrical power, distance of the heat producer from the workpiece surface, light energy and cooling intensity.

18. Process at least according to claim 16, characterised in that in the case of a crankshaft (5) at least the direction of misalignment is measured at several positions (6-9) and the straightening operation is begun at the region of greatest misalignment.

19. Process according to at least one of claims 1 to 18 for the straightening of crankshafts, characterised in that in the grooved region between bearing pin and crankshaft cheek the increase of the compressive internal stresses is carried out in such a circumferential sector that a deformation of the crankshaft cheek in the correct sense follows.

20. Process according to at least one of claims 1 to 19, characterised in that, in dependence upon magnitude of misalignment, direction of misalignment and place of misalignment, the angular region in the circumferential direction of a grooved region on a main bearing and/or connecting-rod bearing of the workpiece, particularly a crankshaft, is determined in which an influencing of the compressive internal stresses should be effected.

21. Process according to at least one of claims 1 to 20, characterised in that it is so straightened that a vectorial addition of the present misalignment and the deformation due to the straightening operation is effected such that there is at least a reduction of the misalignment.

22. Apparatus for carrying out the process according to at least one of claims 1 to 21 for the straightening of workpieces (1, 5) which are out of true, at least comprising a workpiece stressing device (11) arranged on a machine base (10), characterised by means (12, 13, 14) for influencing the compressive internal stresses in a peripheral zone (2) of the workpiece (5), means (13, 15-19) for producing a relative movement between workpiece (5) and the means (12, 14) for influencing the compressive internal stresses, means (17, 19, 20) for determining the position between the workpiece (5) and the last-mentioned means (12, 14), as well as means (21) for controlling the means (12, 14) for influencing the compressive internal stresses and the relative movement between this and the workpiece (5) in dependence upon the data of the means (17, 19, 20) for determining position and further data which determine the place and the magnitude of the compressive internal stresses to be introduced.

23. Apparatus according to claim 22, characterised by at least one power-actuated (13) rolling tool (12) having at least one smoothing roller (25), as well as a device (14) for controlling the rolling force.

24. Apparatus at least according to claim 23, characterised by displaceable bearer means (15) for producing a relative movement between workpiece (5) and rolling tool (12) according to a predeterminable path of movement and in predeterminable positions.

25. Apparatus at least according to claim 23, characterised by at least one deformation measuring system (22) containing measuring elements for determining at least the direction of the workpiece misalignment (3) at predetermined and/or predeterminable positions, wherein the deformation measuring system (22) is connected to a data evaluation device (20) and the latter is connected to a machine control (21).

26. Apparatus according to at least one of claims 22 to 25, characterised by a workpiece rotary drive (23) connected to an angle transducer (24), wherein the angle transducer (24) is itself connected to the deformation measuring system (22).

27. Apparatus at least according to claim 26, characterised by at least one angle transmitter for influencing the means for influencing the compressive internal stresses.

28. Apparatus according to at least one of claims 22 to 27, characterised in that the bearer means (15) carries at least one power-actuated rolling tool (12).

29. Apparatus according to at least one of claims 22 to 28, characterised in that bearer means (15) are provided both for a radial movement and also for an axial movement relative to the workpiece (5).

30. Apparatus according to at least one of claims 22 to 29, characterised in that a programmable computer is provided connected to the machine control (21) in order to process a straightening programme for the workpiece (5) and for influencing the machine devices working off the programme in the appropriate sense.

31. Apparatus at least according to claim 22, characterised in that the means for influencing the compressive internal stresses comprises an induction tempering device.

32. Apparatus at least according to claim 22, characterised in that the means for influencing the compressive internal stresses comprises a laser beam hardening device.

33. Apparatus at least according to claim 31, characterised in that means are provided for controlling at least one of the following parameters, namely the hardness as such, the depth of hardness and the position of hardness.

34. Apparatus according to at least one of claims 22 to 33, characterised in that the apparatus comprises at least the deformation measuring system and apparatus for the straightening as independent units.

35. Apparatus at least according to claim 34, characterised in that at least the independent units, namely the deformation measuring system and apparatus for the straightening, are connected to or are connectable to each other by means of data exchange means.

36. Apparatus at least according to one of claims 34 and 35, characterised in that an independent solid rolling device or tempering device is provided.

## Revendications

1. Procédé pour le dressage de pièces à usiner comportant un axe de rotation et présentant un choc, caractérisé en ce que des contraintes internes de pression sont appliquées localement, de façon délimitée (Béta 1), par durcissement, dans la zone de la couche superficielle (2) de la pièce à usiner (1), dans la zone durcie, au moins pour diminuer le coup (3).

2. Procédé suivant la revendication 1, caractérisé en ce que l'application de contraintes internes de pression est réalisée au moins sur une partie (béta 1) d'une surface périphérique (4) de la pièce à usiner (1).

3. Procédé au moins suivant la revendication 2, caractérisé en ce que l'application de contraintes internes de pression est exécutée dans une zone formant gorge ou congé (4') de la pièce à usiner (1).

4. Procédé suivant au moins l'une quelconque des revendications 1 à 3, caractérisé en ce que l'application de contraintes internes de pression est exécutée par une opération d'écrouissage.

5. Procédé suivant au moins l'une quelconque des revendications 1 à 3, caractérisé en ce que l'application de contraintes internes de pression est exécutée par une opération de trempe dans la zone (2) de la couche superficielle.

6. Procédé suivant au moins l'une quelconque des revendications 1 à 5, caractérisé en ce que, pour agir sur le coup ou le faux-rond, on fait varier l'épaisseur de la zone (2) de la couche superficielle, dans laquelle sont appliquées des contraintes internes de pression, et/ou la grandeur des contraintes internes de pression appliquées.

7. Procédé suivant au moins l'une quelconque des revendications 1 à 6, caractérisé en ce que l'application de contraintes internes de pression se fait au moyen de rayons laser.

8. Procédé suivant au moins l'une quelconque des revendications 1 à 7, caractérisé en ce que, dans le cas d'un durcissement existant de la pièce à usiner (1), on procède à un dressage avec des valeurs telles que, par rapport au durcissement existant, on mette en oeuvre des contraintes internes de pression plus grandes et/ou des contraintes internes de pression pénétrant plus profondément dans la couche superficielle.

9. Procédé au moins suivant la revendication 8, caractérisé en ce que l'opération de durcissement a précédé l'opération de dressage.

10. Procédé au moins suivant la revendication 8, caractérisé en ce que l'opération de durcissement et l'opération de dressage sont exécutées simultanément.

11. Procédé suivant au moins l'une quelconque des revendications 1 à 10, caractérisé en ce que l'état initial d'une pièce à usiner (1) est déterminé, au moins en ce qui concerne la grandeur et la direction du coup ou du faux rond, au moins par sondage ponctuel, puis les données de dressage sont fixées en fonction de ce dernier, et la pièce à usiner est dressée à partir de ces données de dressage.

12. Procédé suivant au moins l'une quelconque des revendications 1 à 11, caractérisé en ce que, par au moins une opération de mesure sur au moins un endroit où il y a eu coup, on détermine la grandeur du coup ainsi que sa direction, et que l'opération de dressage est effectuée en fonction de ces valeurs.

13. Procédé au moins suivant la revendication 12, caractérisé en ce qu'on mesure le résultat d'une opération de dressage précédente et que, si besoin est, une nouvelle opération de dressage est effectuée.

14. Procédé au moins suivant la revendication 13, caractérisé en ce que, si on effectue plus de deux opérations de dressage sur la même pièce à usiner et au même endroit sur celle-ci, les passes de correction sont maintenues constantes.

15. Procédé suivant au moins l'une quelconque des revendications 1 à 14, en particulier pour l'application sur des vilebrequins, des arbres décalés, des arbres à cames, ou des pièces à usiner (1) analogues, caractérisé en ce que les contraintes internes de pression sont appliquées dans la zone d'au moins un congé, ou une gorge en creux, (4') de raccordement.

16. Procédé suivant au moins l'une quelconque des revendications 1 à 14, en particulier pour l'application sur des pièces à usiner cylindriques, caractérisé en ce que les contraintes internes de pression sont appliquées, au moyen d'une opération de laminage, sur chacun des côtés de la surface externe, opposés à la direction de la flexion.

17. Procédé suivant au moins l'une quelconque des revendications 1 à 16, caractérisé en ce que, pour effectuer l'opération de dressage dans la zone durcie, on effectue localement (Béta 1), de façon limitée, avec une intensité plus élevée, le durcissement sur les pièces à usiner (1) déjà durcies, étant entendu que l'intensité du durcissement est essentiellement influencée par au moins l'un des paramètres suivants: force spécifique de laminage, force absolue de laminage, nombre de repliures de laminage, et vitesse de laminage et respectivement puissance du courant, distance entre la source de chaleur et la surface externe de la pièce à usiner, énergie lumineuse et intensité du refroidissement.

18. Procédé au moins suivant la revendication 16, caractérisé en ce que, dans le cas d'un vilebrequin (5), on mesure en plusieurs points (6 - 9) au moins la direction du coup et on fait commencer l'opération de dressage dans la zone du coup le plus grand.

19. Procédé suivant au moins l'une quelconque des revendications 1 à 18 pour le dressage de vilebrequins, caractérisé en ce que, dans la zone de gorge entre tourillon de palier et bras de manivelle du vilebrequin, on procède à l'augmentation des contraintes internes de pression dans un secteur de la périphérie tel, qu'il s'ensuive une déformation du bras de manivelle du vilebrequin dans la direction correcte.

20. Procédé suivant au moins l'une quelconque des revendications 1 à 19, caractérisé en ce qu'en fonction de la grandeur du coup, de sa direction et de son emplacement, on détermine la zone angulaire, dans le sens périphérique d'une zone de congé d'un palier principal ou d'un palier de maneton de la pièce à usiner, en particulier du vilebrequin, zone angulaire dans laquelle doit agir la contrainte interne de pression.

21. Procédé suivant au moins l'une quelconque des revendications 1 à 20, caractérisé en ce qu'on procède au dressage de façon que l'addition vectorielle du coup ou faux-rond existant et de la déformation due à l'opération de dressage ait pour résultante au moins une diminution du coup ou du faux-rond.

22. Dispositif pour la mise en oeuvre du procédé suivant au moins l'une quelconque des revendications 1 à 21 pour le dressage de pièces à usiner (1, 5) présentant un choc, comportant au moins un dispositif (11) de serrage de la pièce à usiner adapté sur le bâti de machine (10), caractérisé par des moyens (12, 13, 14) pour agir sur les contraintes internes de pression dans une zone (2) de la couche superficielle de la pièce à usiner (5), par des moyens (13, 15 à 19) pour créer un mouvement relatif entre la pièce à usiner (5) et le moyen (12, 14) agissant sur la contrainte interne de pression, par des moyens (17, 19, 20) pour relever la position relative entre la pièce à usiner (5) et le dernier moyen cité (12, 14), ainsi que par des moyens (21) pour commander les moyens (12, 14) agissant sur les contraintes internes de pression et pour commander le déplacement relatif entre celui-ci et la pièce à usiner (5) en fonction des données des moyens (17, 19, 20) destinés à relever la position, et en fonction d'autres données qui déterminent l'emplacement et la grandeur des contraintes internes de pression à faire intervenir.

23. Dispositif suivant la revendication 22, caractérisé par au moins un outil de laminage (12), actionné par une source d'énergie extérieure, comportant au moins un galet de laminage (25), et caractérisé par un dispositif (14) de commande de la force de laminage.

24. Dispositif au moins suivant la revendication 23, caractérisé par des moyens mobiles formant supports (15), pour créer un mouvement relatif entre la pièce à usiner (5) et l'outil de laminage (12) après exécution du déplacement, que l'on peut définir à l'avance, et pour l'amener dans des positions que l'on peut définir à l'avance.

25. Dispositif au moins suivant la revendication 23, caractérisé par au moins un système de mesure de déformation (22), comportant des organes de mesure, et destiné à relever, sur des positions prédéfinies ou que l'on peut définir à l'avance, au moins la direction du coup, ou faux rond, (3) de la pièce à usiner, étant entendu que le système de mesure de déformation (22) est relié à un ordinateur d'interprétation des données (20) et que ce dernier est, à son tour, relié à une commande de machine (21).

26. Dispositif suivant au moins l'une quelconque des revendications 22 à 25, caractérisé par un entraînement en rotation (23) de la pièce à usiner, lui-même relié à un indicateur d'angle (24), ce dernier étant, à son tour, raccordé au système de mesure de déformation (22).

27. Dispositif au moins suivant la revendication 26, caractérisé par au moins un indicateur d'angle pour agir sur les moyens influençant les contraintes internes de pression.

28. Dispositif suivant au moins l'une quelconque des revendications 22 à 27, caractérisé en ce que les moyens formant supports (15) portent au moins un outil de laminage (12), actionné par une source d'énergie extérieure.

29. Dispositif suivant au moins l'une quelconque des revendications 22 à 28, caractérisé en ce que des moyens formant supports (15) sont prévus aussi bien pour un mouvement radial que pour un mouvement axial par rapport à la pièce à usiner (5).

30. Dispositif suivant au moins l'une quelconque des revendications 22 à 29, caractérisé en ce qu'il est prévu un ordinateur programmable relié à la commande de machine (21), pour interpréter un programme de dressage pour la pièce à usiner (5) et pour agir dans ce sens sur les dispositifs de la machine exploitant le programme.

31. Dispositif au moins suivant la revendication 22, caractérisé en ce que les moyens agissant sur la contrainte interne de pression sont réalisés sous la forme d'un dispositif de trempe par induction.

32. Dispositif suivant au moins la revendication 22, caractérisé en ce que les moyens agissant sur la contrainte interne de pression sont réalisés sous la forme d'un dispositif de trempe par rayon laser.

33. Dispositif suivant au moins la revendication 31, caractérisé en ce que sont prévus des moyens pour commander au moins l'un des paramètres suivants: dureté proprement dite, profondeur de durcissement, et emplacement du durcissement.

34. Dispositif suivant au moins l'une quelconque des revendications 22 à 33, caractérisé en ce que le dispositif présente au moins les unités indépendantes système de mesure de déformation et dispositif de dressage.

35. Dispositif suivant au moins la revendication 34, caractérisé en ce qu'au moins les unités indépendantes, système de mesure de déformation et dispositif de dressage, sont reliées entre elles, ou peuvent être reliées, par l'intermédiaire de moyens d'échange de données.

36. Dispositif au moins suivant l'une des revendications 34 et 35, caractérisé en ce qu'il est prévu un dispositif d'écrouissage ou de durcissement indépendant.
